# EUROPEAN PATENT APPLICATION

(11) **EP 2 484 809 A1**
(43) Date of publication of application: **08.08.2012**
(21) Application number: 11152995.4
(22) Date of filing: 02.02.2011
(51) Int. Cl.: C25B 1/08, C25B 9/20

(54) **Apparatus for producing a mixture of hydrogen and oxygen**

(71) Applicant: Hwang, Boo-Sung, Seoul (KR)
(72) Inventor: Hwang, Boo-Sung, Seoul (KR)
(74) Representative: Hocking, Adrian Niall

(57) **Abstract**

The apparatus for producing a mixture of hydrogen and oxygen comprises a tube member (10) having a certain inner diameter; a first plate member unit (30) which is inserted into an inner surface of the tube member (10) and includes a plurality of first plate members (31) having a main hole (31 a) at its center, and a first inner spacing member (32) which is alternately installed with the first plate member (31) and has a certain thickness; a second plate member unit (40) which is installed in the interior of the main holes (31 a) of the stacked first plate member (31) and includes a plurality of second plate members (41) installed with being spaced apart from an inner surface of the main hole (31 a) and a second inner spacing member (42) which is alternately installed with the second plate member (41) and has a certain thickness; front and rear covers (50, 60) which are installed in the front and rear sides of the tube member (10) and fix the second plate unit (40) with a certain space from the inner side of the main hole (31a) and is insulated from the second plate member unit (40); a water supply hole (70) which is formed in the front cover (50) for supplying water to the electrolyte space (10a) formed between the first plate member unit (30) and the second plate member unit (40); and a gas discharge hole (80) which is formed in the front cover (50) for discharging a mixture of hydrogen and oxygen produced.

## Description

### TECHNICAL FIELD

The present invention relates to an apparatus for more efficiently producing a mixture of hydrogen and oxygen using water.

### BACKGROUND ART

The apparatus for generating a harmful mixture of hydrogen and oxygen is directed to generating a mixture of hydrogen and oxygen which are obtained based on an electrolysis and does not produce pollution and are not harmful in such a manner that water with a small amount of electrolyte to an electrolytic cell with positive and negative electrodes. At this time, the hydrogen and oxygen are produced at a mole ratio of 2:1, the hydrogen produced in a bubble shape at the surface of the negative electrode, the oxygen produced in a bubble shape at the surface of the positive electrode. The thusly produced hydrogen and oxygen are mixed in a mixed gas form, which can burn. During the combustion, since the mixture of hydrogen and oxygen does not produce pollutants, it is very friendly and can be recognized as a new energy source.

However, since the amount of hydrogen and oxygen as compared to the electric power used for generating the same and applied to the positive and negative electrodes, it is disadvantageously needed to add a certain auxiliary gas such as propane gas to the mixture of hydrogen and oxygen, which leads to a bad production efficiency.

### DISCLOSURE OF THE INVENTION

Accordingly, it is an object of the present invention to provide an apparatus for producing a mixture of hydrogen and oxygen which can promote an economic production by increasing the amount of a mixture of hydrogen and oxygen as compared to electric energy used.

To achieve the above objects, there is provided an apparatus for producing a mixture of hydrogen and oxygen, comprising a tube member 10 having a certain inner diameter; a first plate member unit 30 which is inserted into an inner surface of the tube member 10 and includes a plurality of first plate members 31 having a main hole 31 a at its center, and a first inner spacing member 32 which is alternately installed with the first plate member 31 and has a certain thickness; a second plate member unit 40 which is installed in the interior of the main holes 31 a of the stacked first plate member 31 and includes a plurality of second plate members 41 installed with being spaced apart from an inner surface of the main hole 31 a and a second inner spacing member 42 which is alternately installed with the second plate member 41 and has a certain thickness; front and rear covers 50 and 60 which are installed in the front and rear sides of the tube member 10 and fix the second plate unit 40 with a certain space from the inner side of the main hole 31 a and is insulated from the second plate member unit 40; a water supply hole 70 which is formed in the front cover 50 for supplying water to the electrolyte space 10a formed between the first plate member unit 30 and the second plate member unit 40; and a gas discharge hole 80 which is formed in the front cover 50 for discharging a mixture of hydrogen and oxygen produced.

The first and second plate members 31 and 41 are formed of carbon nano tube alloy steel.

The surfaces of the first and second plate members 31 and 41 are nano-polished, so that an electrolysis can more efficiently performed, and the produced bubbles of hydrogen and oxygen can be easily detached.

The tourmaline photo catalyst are attached to the surfaces of said first and second plate members 31 and 41.

The second plate member unit 40 includes a plurality of second plate members 41 arranged alternately with respect to one another, and a support rod 45 which passes through a through hole formed in the second inner spacing member 42, and said support rod 45 pass through the insulation brackets 55 and 65 installed in the front and rear covers 50 and 60 and are engaged.

### EFFECTS

In the apparatus for generating a mixture of hydrogen and oxygen, it is possible to more efficiently produce a mixture of hydrogen and oxygen without adding an auxiliary gas such as propane by increasing the amount of hydrogen and oxygen as compared to electric energy used, which leads to more economical production.

Since the hydrogen and oxygen produced in bubble shapes from the electrodes can be easily separated, the effective area of the electrodes in which electrolysis occurs is increased, by means of which an electrolyte efficiency can be enhanced.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating an apparatus for producing a mixture of hydrogen and oxygen according to the present invention;
Figure 2 is a disassembled perspective view of Figure 1; and
Figure 3 is a cross sectional view taken along the line III-III' of Figure 1.

### MODES FOR CARRYING OUT THE INVENTION

The apparatus for producing a mixture of hydrogen and oxygen according to the present invention will be described with reference to the accompanying drawings.

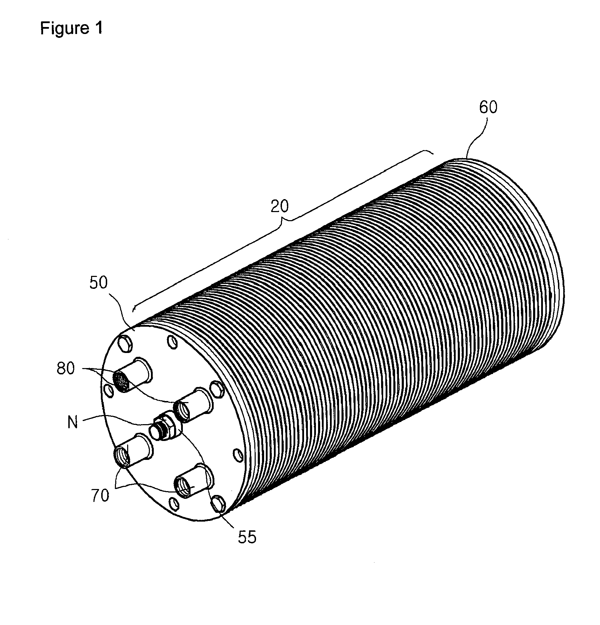

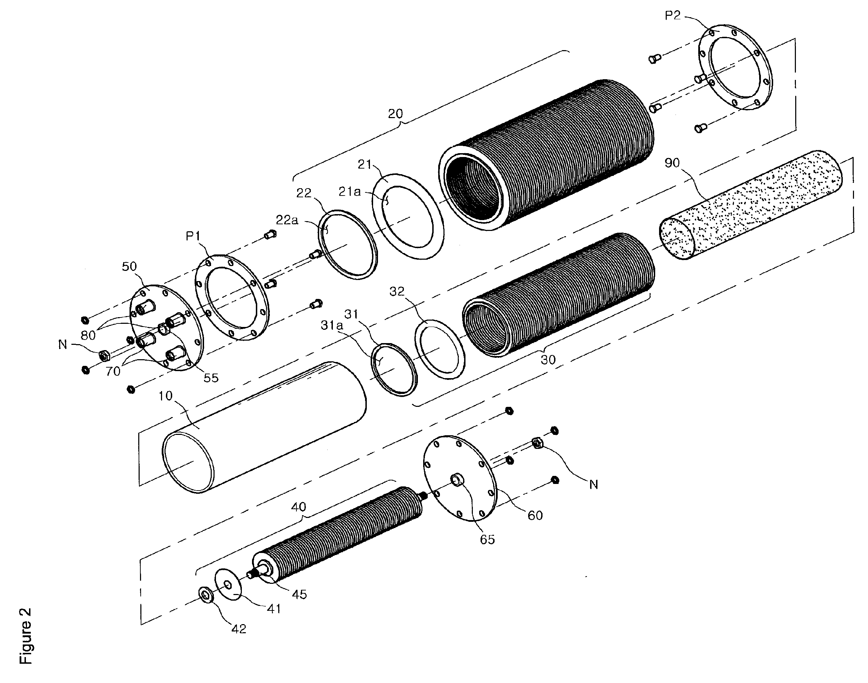

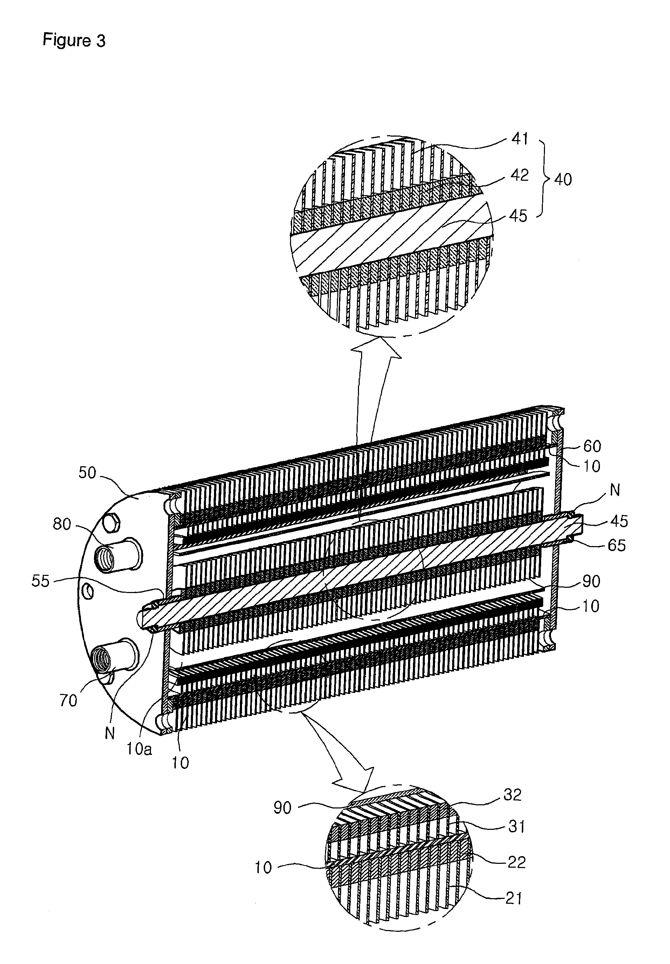

Figure 1 is a perspective view illustrating an apparatus for producing a mixture of hydrogen and oxygen according to the present invention, and Figure 2 is a disassembled perspective view of Figure 1, and Figure 3 is a cross sectional view taken along the line III-III of Figure 1.

As shown therein, the apparatus for producing a mixture of hydrogen and oxygen comprises a tube member 10 having a certain inner diameter; a first plate member unit 30 which is inserted into an inner surface of the tube member 10 and includes a plurality of first plate members 31 having a main hole 31 a at its center, and a first inner spacing member 32 which is alternately installed with the first plate member 31 and has a certain thickness; a second plate member unit 40 which is installed in the interior of the main holes 31 a of the stacked first plate member 31 and includes a plurality of second plate members 41 installed with being spaced apart from an inner surface of the main hole 31 a and a second inner spacing member 42 which is alternately installed with the second plate member 41 and has a certain thickness; front and rear covers 50 and 60 which are installed in the front and rear sides of the tube member 10 and fix the second plate unit 40 with a certain space from the inner side of the main hole 31 a and is insulated from the second plate member unit 40; a water supply hole 70 which is formed in the front cover 50 for supplying water to the electrolyte space 10a formed between the first plate member unit 30 and the second plate member unit 40; and a gas discharge hole 80 which is formed in the front cover 50 for discharging a mixture of hydrogen and oxygen produced.

At this time, the outer spacing member 22 is able to space a plurality of cooling fins 21 from one another. The first inner spacing member 32 spaces a plurality of first plate members 31 from one another. The second inner spacing member 42 is able to space a plurality of second plate members 41 from one another. In the present invention, the outer spacing member 22, the first inner spacing member 32 and the second inner spacing member 42 each have the thickness of 3mm.

The second plate member 41 does not contact with an inner surface of the main hole 31 a of the first plate member 31, but are spaced apart. In the present invention, the distance between the inner surface of the main hole 31 a of the first plate member 31 and the second plate member 41 is 15mm.

The tube member 10 can be implemented in a certain shape such as a circular tube shape, a rectangular tube shape, a hexagonal tube shape or an octagonal tube shape, and is generally made of stainless or an alloy steel. In the present invention, it was described or will be described as being formed in a circular tube shape. The tube member 10 forms a body.

The cooling fin 21 of the cooling part 20 is equipped with an insertion hole 21 a into which the tube member 10 is inserted. The outer spacing member 22 is equipped with an insertion hole 22a into which the tube member 10 is inserted. The diameter of the outer spacing member 22 is smaller than the diameter of the cooling fin 21. In the above structure, the cooling fin 21 and the outer spacing member 22 are alternately inserted into the tube member 10, so it is preferred that the cooling part 20 is installed outside the tube member 10.

In the first plate unit 30, the first plate member 31 with the first main hole 31 a has a shape corresponding to the inner diameter of the tube member 10, and the first inner spacing member 32 has a shape corresponding to the inner diameter of the tube member 10. Here, the first inner spacing member 32 is a circular profile larger than the diameter of the first main hole 31 a. With the above configuration, the first plate member 31 and the first inner spacing member 32 are alternately inserted into the first main hole 31 a, so that the first plate member unit 30 is installed in the interior of the tube member 10. The main holes 31 a of a plurality of the first plates 31 form the cylinders.

The first plate member 31 is made of a certain material which can perform electrolysis. As one example of the above material, the first plate member 31 is made of a carbon nano tube alloy steel. The carbon nano tube alloy steel is made in such a manner that a carbon nano tube is powdered, and nickel and tourmaline is made in a powder form and is compressed in a first plate material shape through a plastic process. As an additive, a decarboxylation potassium compound might be added, and the plastic process is performed at a temperature of about 1300°C.

The first plate member 31 might be formed of a metal such as stainless and is nano-polished for an easier electrolysis and an easier dislocation of hydrogen and oxygen bubbles. The first plate member 31 is made of stainless, alloy steel or the like.

The nano-polishing process is to polish the surfaces of the first plate member 31 in the units of nano. So, it is possible to easily have hydrogen and oxygen bubbles separated with the helps of a minimum friction force of the surface of the first plate member 31. In particular, when the size of object in a bulk state is decreased to the nano size, mechanical, thermal, electric, magnetic and optical properties change. Therefore, the electrolysis of water can be more actively performed by changing the physical properties of the surface of the first plate member 31.

Tourmaline might be attached to the surface of the first plate member 31 as a photocatalyst. The tourmaline photocatalyst can be made by grinding the tourmaline from a few micro sizes to a few nano meter sizes and is plastic-processed at a temperature of 1300°C and is attached to the first plate member 31 using a certain adhesive. The tourmaline is a mineral having a hexagonal structure having a crystal structure similar to a crystal and can be used to produce electricity by a friction method and a lot of anion, while promoting electrolysis by means of which lots of hydrogen and oxygen can be produced. Since the tourmaline is ground into powder form and plastic-formed, the contacting area with water can be increased along with more micro pores, which are beneficial to photocatalyst. So, it is possible to promote electrolysis of water by attaching the tourmaline photocatalyst to the first plate member 31.

The second plate member unit 40 is configured as the circular second plate member 41 being smaller than the first main hole 31 a, the second plate member 41 having a diameter smaller than the second plate member 42, and the second inner spacing member 42 used for spacing the second plate member are alternately installed. At this time, there is further provided a support rod 45 which passes through the through hole formed in the second plate member 41 and the second inner spacing member 42 which are alternately arranged. At this time, the both ends of the support rod 45 pass through the insulation brackets 55 and 65 installed in the center of the front and rear covers 50 and 60 and are engaged with the nut N.

The surface of the second plate member 41 is made of carbon nano tube alloy steel in the similar method with the first plate member in order for the hydrogen and oxygen bubbles to be easily detached or is made by nano polishing a metallic plate such as stainless or can be implemented by attaching tourmaline photo catalyst. The second plate member 41 can be made of a certain metal such as a carbon nano tube alloy steel, a stainless or an alloy steel.

Here, the space between the first plate member unit 30 and the second plate unit 40 becomes an electrolyte space 10a in which electrolysis is performed.

The electrolysis occurring in the electrolyte space 10a is particularly performed between the inner portion of the first inner space member 32 and the second plate member 41 in the first plate member 31. It is possible to change the amounts of hydrogen or oxygen produced by changing the area of the inner portions of the first inner spacing member 32 and the area of the second plate member 41. For example, it is possible to produce more hydrogen gas as compared to the oxygen by more increasing the area of the second plate member 41 as compared to the area of the first plate member 31 exposed in the inner direction of the first inner spacing member 32 and by applying the positive power to the first plate member unit 30 through the tube member 10 and the negative power to the second plate member unit 40. On the contrary, it is possible to produce more oxygen gas by applying the negative power to the first plate member unit 30 and the positive power to the second plate member unit 40.

The front and rear covers 50 and 60 are installed at both ends of the tube member 10, and insulation brackets 55 and 65 are installed at a center of the same for supporting the supporting rod 45 of the second plate member unit 40. The front and rear covers 50 and 60 are preferably equipped with a substantial durability for stably supporting the support rod 45 of the second plate member unit 40. It is preferably made of a thick metallic material as compared to the first and second plate members 31 and 41.

At this time, connecting the front and rear covers 50 and 60 at the both ends of the tube member 10 can be implemented in various methods. For example, the flanges P1 and P2 are welded at both ends of the tube member 10, and the front and rear covers 50 and 60 are coupled to the flanges P1 and P2 using bolts and nuts. When a thread part and a nut part are formed between the front and rear covers 50 and 60 and the tube member 10 for a thread engagement, it is possible to engage the front and rear covers 50 and 60 to the tube member 10 without using the flanges. The thread part and the nut part are formed between either front or rear cover 50 and 60 and the tube member 10, and the flange is installed between either the front or rear cover 50 and 60 and the tube member 10, so the front and rear covers 50 and 60 can be engaged to the tube member 10.

The water supply hole 70 is installed in a front lower side of the front cover 50 in one pair for thereby supplying water to the electrolyte space.

The gas discharge hole 80 is installed in a front upper side of the front cover 50 for thereby a mixture of hydrogen and oxygen gases produced in the electrolyte space is discharged. Here, the water supply hole 70 is formed in a lower side of the gas discharge hole 80.

The photocatalyst tube 90 partitions the first and second plate member units 30 and 40, and the tourmaline photo catalyst is formed in a tube shape. The tourmaline is ground into a powder form by a few micro sizes or a few nano meter sizes and is plastic-formed in a tube shape at a temperature of about 1300°C. The photo catalyst tube 90 produces a lot of anion during the electrolysis, by means of which the electrolysis is further promoted. It plays a role of filtering fine plate particles which might be produced from the first and second plate member units 30 and 40 in the course of electrolysis. When the first and second plate members 31 and 41 are broken and separated, it is possible to prevent an electric circuit short by means of the first and second plate members 31 and 41.

With the helps of the above structure, water can be supplied to the electrolyte space through a pair of water supply holes 70, and the positive power is applied to the first plate member unit 30 through the first tube member 10, and the negative power is applied to the second plate member unit 40. So, hydrogen and oxygen bubbles are produced between the first and second plate members 31 and 41 in the interior of the electrolyte space 10a, and the hydrogen and oxygen gases are mixed and discharged to the outside through the gas discharge hole 80.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An apparatus for producing a mixture of hydrogen and oxygen, comprising:
a tube member (10) having a certain inner diameter;
a first plate member unit (30) which is inserted into an inner surface of the tube member (10) and includes a plurality of first plate members (31) having a main hole (31 a) at its center, and a first inner spacing member (32) which is alternately installed with the first plate member (31) and has a certain thickness;
a second plate member unit (40) which is installed in the interior of the main holes (31 a) of the stacked first plate member (31) and includes a plurality of second plate members (41) installed with being spaced apart from an inner surface of the main hole (31 a) and a second inner spacing member (42) which is alternately installed with the second plate member (41) and has a certain thickness;
front and rear covers (50, 60) which are installed in the front and rear sides of the tube member (10) and fix the second plate unit (40) with a certain space from the inner side of the main hole (31a) and is insulated from the second plate member unit (40);
a water supply hole (70) which is formed in the front cover (50) for supplying water to the electrolyte space (10a) formed between the first plate member unit (30) and the second plate member unit (40); and
a gas discharge hole (80) which is formed in the front cover (50) for discharging a mixture of hydrogen and oxygen produced.

2. The apparatus of claim 1, further comprising a cooling part (20) which is installed in an outer side of the tube member (10) and includes a plurality of cooking fins (21) and an outer spacing member (22) which is alternately installed with respect to the cooling fin (21) and has a certain thickness.

3. The apparatus of claim 1, further comprising a photo catalyst tube (90) which is installed between the first plate member unit (30) and the second plate member unit (40).

4. The apparatus of claim 1, wherein said first and second plate members (31, 41) are formed of carbon nano tube alloy steel.

5. The apparatus of claim 1, wherein the surfaces of said first and second plate members (31, 41) are nano-polished, so that an electrolysis can more efficiently performed, and the produced bubbles of hydrogen and oxygen can be easily detached.

6. The apparatus of claim 1, wherein tourmaline photo catalyst are attached to the surfaces of said first and second plate members (31, 41).

7. The apparatus of claim 1, wherein said second plate member unit (40) includes a plurality of second plate members (41) arranged alternately with respect to one another, and a support rod (45) which passes through a through hole formed in the second inner spacing member (42), and said support rod (45) pass through the insulation brackets (55, 65) installed in the front and rear covers (50, 60) and are engaged.
